# EUROPEAN PATENT APPLICATION

(11) **EP 2 343 755 A1**
(43) Date of publication of application: **13.07.2011**
(21) Application number: 08877983.0
(22) Date of filing: 07.11.2008
(51) Int. Cl.: H01M 2/20

(54) **SECONDARY BATTERY BUSBAR AND SECONDARY BATTERY MODULE**

(71) Applicant: Mitsubishi Heavy Industries, Ltd., Tokyo 108-8215 (JP); Nanaboshi Electric Mfg. Co., Ltd., Tokyo 164-0002 (JP)
(72) Inventor: OYA, Takumi, Tokyo 108-8215 (JP); HASHIMOTO, Tsutomu, Tokyo 108-8215 (JP); HASHIZAKI, Katsuo, Nagasaki-shi Nagasaki 850-8610 (JP); OHISHI, Masazumi, Nagasaki-shi Nagasaki 850-8610 (JP); TOMINAGA, Shuji, Tokyo 164-0002 (JP); MIYASHITA, Yoshinaga, Tokyo 164-0002 (JP); ITO, Hirofumi, Tokyo 164-0002 (JP)
(74) Representative: Henkel, Feiler & Hänzel
(86) International application number: PCT/JP2008/070309
(87) International publication number: WO 2010/052788

(57) **Abstract**

A bus bar for secondary battery is provided to electrically connect a plurality of secondary batteries in high reliability. The bus bar includes a plate section which is electrically conductive, opening sections which are provided for said plate section and in which convex electrode terminals of secondary batteries are inserted, respectively; and first slit sections formed to extend ends of the plate section from said opening sections, respectively. A diameter of said opening section is smaller than a diameter of said electrode terminal such that the inserted electrode terminal is fastened.

## Description

### Technical Field

The present invention is related to a bus bar for secondary battery which connects secondary batteries and a secondary battery module.

### Background Art

A secondary battery such as a lithium secondary battery has a cell container. A positive electrode and a negative electrode are accommodated as cell elements for charge and discharge in the cell container. Electrolyte is encapsulated into the cell container and the cell elements are impregnated in the electrolyte. The positive and negative electrode terminals are provided for the cell container to electrically connect the cell elements with an external system. The electrode terminal is generally formed to have a convex shape so as to protrude from the cell container.

When the supply of a high voltage is required, a plurality of secondary batteries are electrically connected and they are used as a secondary battery module. The plurality of secondary batteries are electrically connected by bus bars for the secondary battery. The electrode terminal of one of the secondary batteries is connected with the electrode terminal of the other secondary battery by the bus bar for the secondary battery.

The bus bar is required to electrically connect the plurality of secondary batteries with high reliability.

In conjunction with the above description, Japanese Patent Publication (JP 2007-324004A) discloses a related technique. In this Publication, a connection member (bus bar) is subjected to plastic deformation to fit with an electrode terminal.

### Disclosure of the Invention

An object of the present invention is to provide a bus bar for secondary battery which can electrically connect a plurality of secondary batteries with high reliability and a secondary battery module.

The bus bar according to the present invention includes a plate section which is electrically conductive, opening sections which are provided for the plate section and in which convex electrode terminals of the secondary batteries are inserted, and first slit sections extending from the opening sections and designed to elastically change a shape of the opening section when the electrode terminal is inserted in the opening section. The opening section is formed to have a smaller diameter than that of the electrode terminal such that the inserted electrode terminal is fastened with elastic force.

According to the present invention, since the first slit section is provided and the opening section has the smaller diameter than that of the electrode terminal, the opening section is widened elastically when the electrode terminal is inserted thereinto. Thus, the electrode terminal is elastically fastened. If the bus bar is very firmly stuck on the electrode terminal, a sticking portion would be damaged when an impact is applied to the sticking portion. On the other hand, according to the present invention, because the electrode terminal is elastically fastened in the opening section, the tolerance to a mechanical impact becomes high. Therefore, it is possible to improve the reliability of the electrical connection between the secondary batteries.

Moreover, the above bus bar may further include second slit sections provided for the plate section. The second slit section is provided on a position where stress is concentrated when the opening section is deformed.

According to the present invention, by providing the second slit sections, it is possible to prevent the stress from being concentrated on a specific position in the plate section. It is possible to prevent the plate section from being damaged more surely by preventing the concentration of stress.

The above bus bar may further include an auxiliary bar which is detachable from the plate section, and a pair of notches for the auxiliary bar, provided for the plate section and configured to engage with both ends of the auxiliary bar. The pair of notches are provided at to put the first slit section between them at ends in a direction orthogonal to a direction along the first slit section. By the auxiliary bar engaging with the pair of notches in their ends, force is applied to fasten the opening section.

According to the present invention, auxiliary force can be added by the auxiliary bar to fasten the electrode terminal.

Moreover, the above-mentioned bus bar may include an elastic cover attached to cover the plate section in the state that the electrode terminal has been inserted.

According to the present invention, the bus bar for the secondary battery is covered by the elastic cover. Thus, it is possible to prevent the bus bar from being exposed to air and as the result of this, corrosion of the bus bar can be prevented.

The plate section extends in a first direction as a longitudinal direction. The two opening sections are provided at two positions along the first direction. Two first slit sections are provided for the two opening sections, respectively, and each of the two first slit sections may be formed to extend along the first direction.

The secondary battery module according to the present invention is provided with a plurality of secondary batteries, each of which has convex electrode terminals, and the above-mentioned bus bar which connects the electrode terminals of the plurality of secondary batteries.

The bus bar according to the present invention is provided with a plate section which is electrically conductive, and opening sections which are provided for the plate section and in which the convex electrode terminals are inserted. The plate section is of a laminate structure of a plurality of plate elements.

By employing the plate section of the laminate structure, the characteristic of the plate section in the thickness direction can be varied. Thus, the characteristic of the plate section can be optimized to be adaptive for an application field.

The plurality of plate elements may be different in material.

The plurality of plate elements may be different in plate thickness.

The sizes of the opening sections may be different among the plurality of plate elements.

In the plurality of plate elements, the size of the opening section may be made larger on the side on which the electrode terminal is inserted. In this way, when the opening section is larger on the side which the electrode terminal is inserted (on the side of the secondary battery), it becomes easy to insert the electrode terminal in the opening section.

In each of the plurality of plate elements, the opening section can take a taper shape so that the opening section diameter is larger on the side which the electrode terminal is inserted. Thus, it becomes easy to insert the electrode terminal in the opening section. Also, it becomes easy for the inserted electrode terminal to contact the plate section at plural points and the electric contact resistance between the electrode terminal and the plate section can be reduced.

The width of the plate section may be different among the plurality of plate elements.

Thus, the surface area of the plate section can be increased. Because the surface area of the plate section increases, the heat radiation performance of the plate section can be improved.

Moreover, the above-mentioned bus bar may further include a rivet group provided for the plate section and configured to couple the plurality of plate elements. The rivet group is provided with a plurality of rivets.

The plate section extends in the first direction as the longitudinal direction and the opening sections may be provided for the plate sections to arrange at two positions along the first direction.

The secondary battery module according to the present invention is provided with a plurality of secondary batteries which have the convex electrode terminals and the bus bars which connect the electrode terminals of the plurality of secondary batteries.

According to the present invention, the bus bar can electrically connect the plurality of secondary batteries in high reliability, and the secondary battery module are provided.

### Brief Description of the Drawings

FIG. 1A is a top view of a secondary battery module according to a first embodiment of the present invention;
FIG. 1B is a side view of the secondary battery module according to the first embodiment;
FIG. 2 is a top view of a bus bar for a secondary battery according to the first embodiment;
FIG. 3 is a perspective view showing a tool for bus bar insertion;
FIGS. 4A and 4B are diagrams showing an inserting method of an electrode terminal;
FIG. 5 is a perspective view of the bus bar according to the first embodiment;
FIG. 6A is a cross sectional view showing an opening section;
FIG. 6B is a perspective view showing another example of the opening sections;
FIG. 7 is a cross sectional view showing the opening section;
FIG. 8 is a cross sectional view showing the opening section;
FIG. 9A is a cross sectional view showing the opening section;
FIG. 9B is a cross sectional view showing the opening section;
FIG. 9C is a cross sectional view showing a manufacturing process of the bus bar according to the first embodiment;
FIG. 9D is a cross sectional view showing the manufacturing process of the bus bar according to the first embodiment;
FIG. 10A is a cross sectional view showing a plate section;
FIG. 10B is a perspective view showing another example of the plate section;
FIG. 11 is a plan view showing a modification of a first slit section;
FIG. 12 is a plan view showing another modification of the first slit section;
FIG. 13 is a plan view showing still another modification of the first slit section;
FIG. 14 is a top view of the bus bar according to a second embodiment of the present invention;
FIG. 15 is a side view of the bus bar according to the second embodiment; and
FIG. 16 is a perspective view of the bus bar for a secondary battery according to a third embodiment of the present invention.

### Best Mode for Carrying Out the Invention

### [First Embodiment]

Hereinafter, the present invention will be described with reference to the attached drawings.

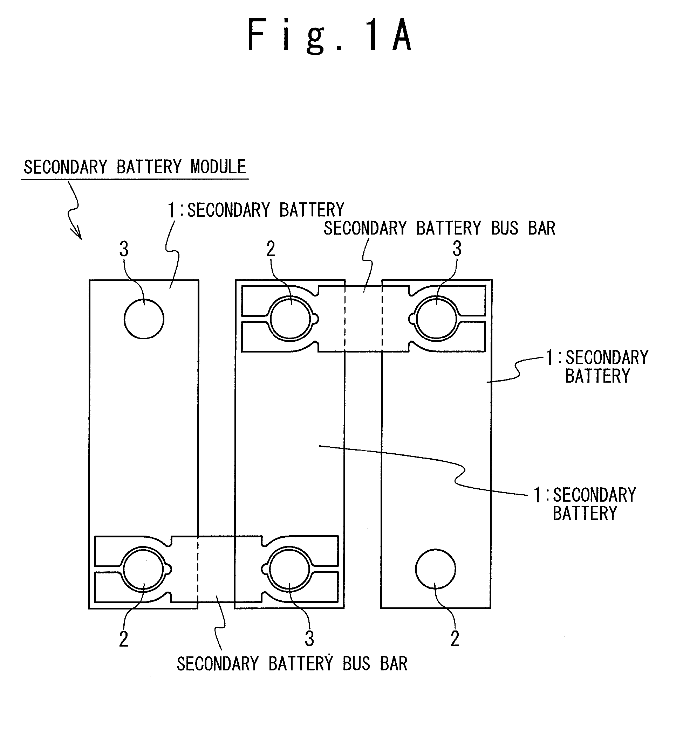

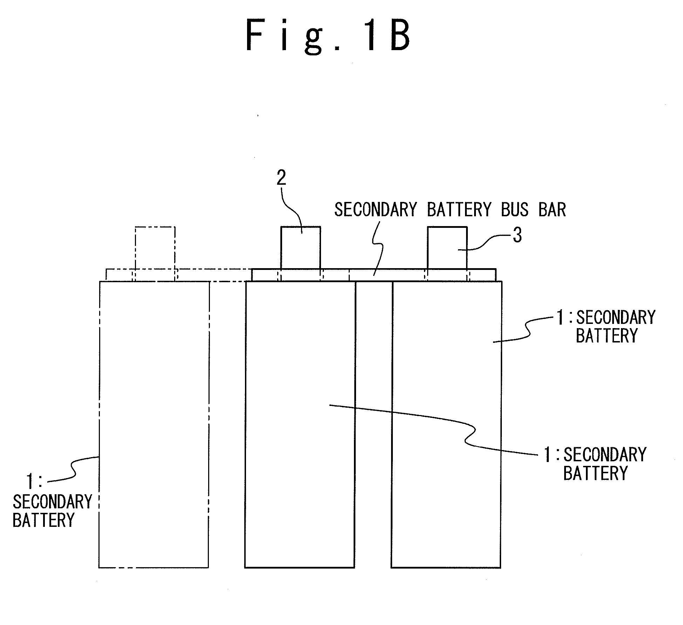

FIG. 1A is a top view of a secondary battery module according to a first embodiment of the present invention. Also, FIG. 1B is a side view showing the secondary battery module.

As shown in FIG. 1A and FIG. 1B, the secondary battery module according to the present embodiment is provided with a plurality of secondary batteries 1. Adjacent two of the plurality of secondary batteries 1 are electrically connected by a bus bar for the secondary battery (hereinafter, to be referred to as a bus bar).

Each of the plurality of secondary batteries 1 has a cell container. An electricity generating element (not shown) which is chargeable and dischargeable is accommodated in the cell container. The electricity generating element is provided with a positive electrode and a negative electrode. Non-aqueous electrolyte is filled in the cell container and the electricity generating element is impregnated in the non-aqueous electrolyte.

In each secondary battery 1, two electrode terminals (positive electrode terminal 2 and negative electrode terminal 3) are provided for the cell container. The positive electrode terminal 2 is connected with the positive electrode of the electricity generating element in the cell container and the negative electrode terminal 3 is connected with the negative electrode of the electricity generating element. The two electrode terminals 2 and 3 are provided in a convex shape to protrude from the cell container. Each of the two electrode terminals 2 and 3 has a column like shape. For the two adjacent secondary batteries 1, the positive electrode terminal 2 of one of the two secondary batteries 1 is connected with the negative electrode terminal 3 of the other secondary battery 1 by the bus bar. In this way, the plurality of secondary batteries 1 are electrically connected in serial.

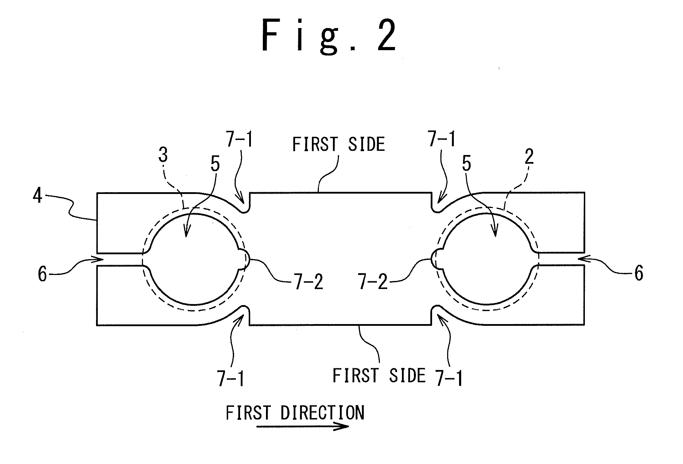

FIG. 2 is a top view showing the bus bar. The bus bar is formed from a plate section 4 of a plate like shape. The plate section 4 extends in a first direction as a longitudinal direction. Opening sections 5, first slit sections 6 and second slit sections 7 (7-1, 7-2) are provided for the plate section 4.

The plate section 4 is configured of a material which is electrically conductive. The material of the plate section 4 is not especially limited if it is electrically conductive, but for example, brass, copper alloy, SUS, tin, nickel, steel, aluminum and beryllium copper alloy and so on are used. Surface treatment may be carried out to the plate section 4 according to necessity. For example, in order to improve electrical conductivity, conductive plating of gold, silver and so on may be carried out to the surface. Oppositely, for the prevention of electric shock, insulating material (e.g. insulation resin) may be coated on the surface of the plate section 4.

The opening sections 5 are provided for two positions of the plate sections 4. The opening section 5 is a portion in which the electrode terminal 2 or 3 is inserted. The two opening sections 5 are arranged along the first direction. The shape of each opening section 5 is determined based on the shape of the electrode terminal 2 or 3 and generally is circular. The diameter of each opening section 5 is smaller than that of the electrode terminal 2 or 3.

The first slit section 6 is provided for each opening section 5. That is, the first slit sections 6 are provided for two positions of the plate section 4. Each of the two first slit sections 6 extends from the end of the plate section 4 to each opening section 5. The first slit section 6 extends from each opening section 5 to the outside along the first direction.

When the electrode terminal 2 or 3 is inserted, each opening section is widened elastically due to the first slit section 6. The inserted electrode terminal 2 or 3 is elastically fastened by the plate section 4.

The second slit sections 7 (7-1 or 7-2) are provided to prevent stress from concentrating on one portion of the plate section 4. When the electrode terminal 2 or 3 is inserted, each opening section 5 is widened on the side of the first slit section 6. On the other hand, the stress is concentrated in the portion of the plate section 4 opposite to the first slit section 6 with respect to the opening section 5, because the plate section 4 is compressed. Therefore, the second slit sections 7 (7-1 or 7-2) are provided on the positions of the plate section opposite to the first slit section 6 with respect to the opening section 5. Specifically, the slits 7-1 are provided for the central positions of the plate section 4 along the first direction rather than the opening section 5 in each of the two sides of the plate section 4 along the first direction (the first sides in the FIG. 2). Also, the slit 7-2 is provided to extend from the opening section 5 to the central position of the plate section 4. Because the second slit sections 7 (7-1 7-2) exist in these positions, the stress never concentrates on one position of the plate section 4 even if the opening section 5 is widened. Thus, permanent deformation of the plate section 4 can be prevented.

As described above, if the bus bar with the above structure is used, the opening section 5 is widened when the electrode terminal 2 or 3 is inserted, because the diameter of opening section 5 is smaller than the diameter of the electrode terminal 2 or 3. Because the first slit section 6 exists, the opening section 5 can deform elastically. Therefore, the electrode terminal 2 or 3 can be easily inserted even if excessive force is not applied. The inserted electrode terminal 2 or 3 can be elastically fastened. In this way, because the electrode terminal 2 or 3 is elastically fastened, the coupling section of the plate section 4 and the electrode terminal 2 or 3 is difficult to be damaged, even if an impact is applied. Also, it is possible to prevent the stress from concentrating on one position of the plate sections 4 through the existence of the second slit sections 7 (7-1 and 7-2). Thus, the tolerance to the impact can be more improved. Also, it is possible to prevent the plate section 4 from deforming permanently even if the opening section 5 is deformed. Therefore, the plurality of secondary batteries can be well connected electrically with reliability.

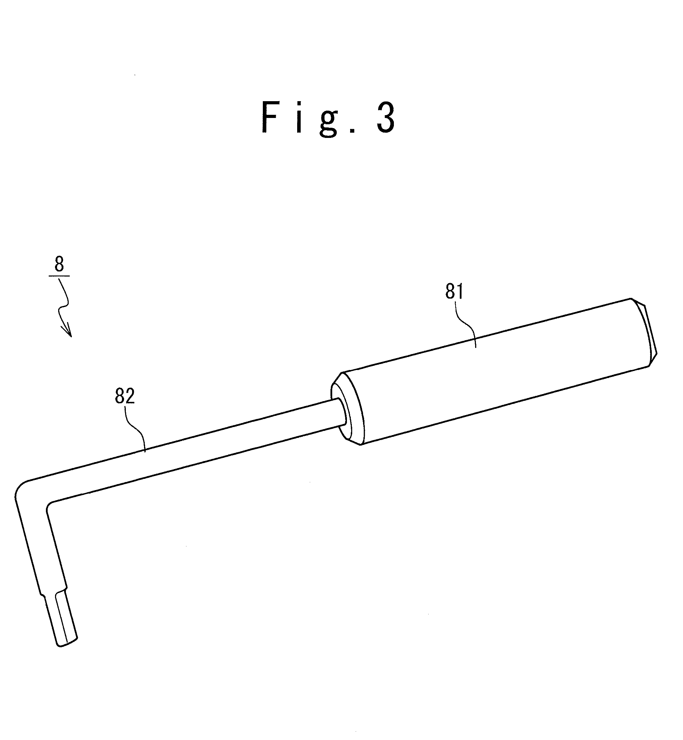

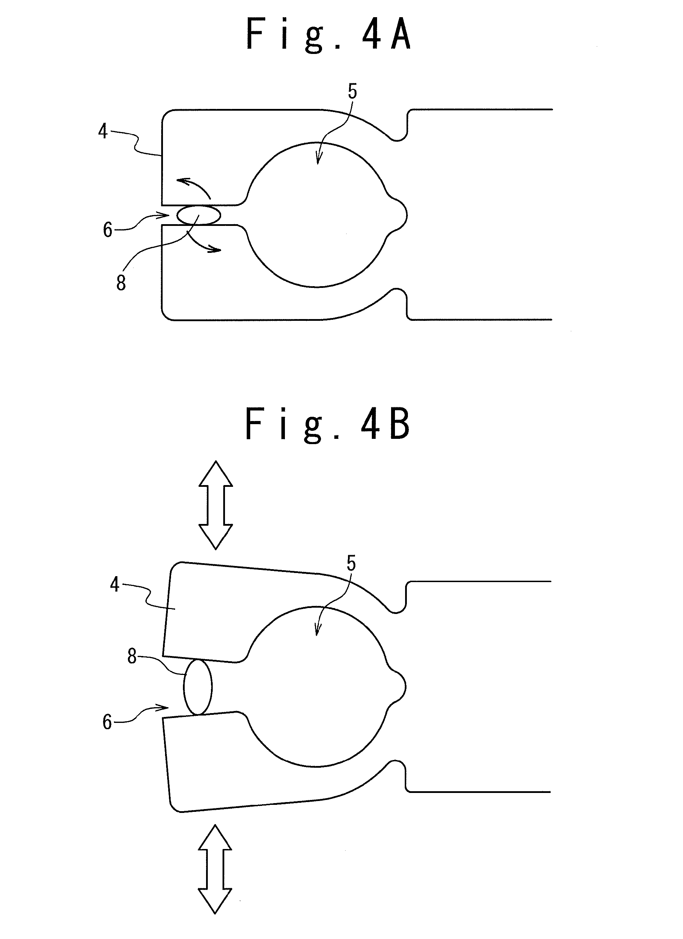

Also, when the electrode terminal 2 or 3 is inserted in the bus bar with the above mentioned structure, it is convenient to use a tool, whose tip portion has an ellipsoidal sectional shape. FIG. 3 is a perspective view showing an example of such a tool 8 for bus bar insertion. The tool 8 is provided with a holding section 81 which is held by a user and an extending section 82 which extends from the holding section 81. The extending section 82 is bent on the way to form a right angle. The extending section 82 is formed to have the ellipsoidal sectional shape at the tip portion. FIG. 4A and FIG. 4B are diagrams showing works when the electrode terminal 2 or 3 is inserted by using the tool 8 for bus bar insertion. As shown in FIG. 4A, the tip portion of the tool 8 for bus bar insertion is inserted into the first slit section 6 so that the direction of longitudinal axis is coincident with the direction of the first slit section 6. Subsequently, the holding section 81 is turned. As shown in FIG. 4B, the first slit section 6 is widened by the tool 8 for bus bar insertion. If the electrode terminal 2 or 3 is inserted in this state, the electrode terminal 2 or 3 can be simply inserted.

Next, the plate section 4 will be described in detail.

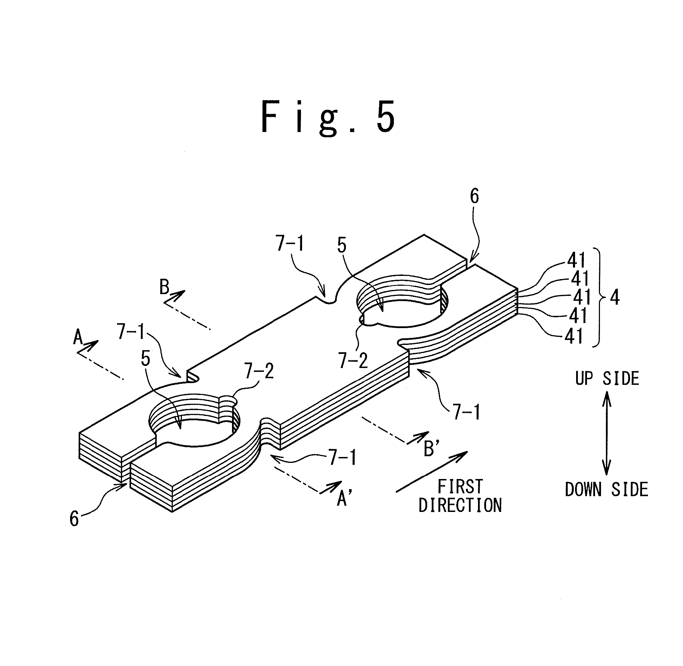

FIG. 5 is a perspective view of the bus bar. As shown in FIG. 5, the plate section 4 has a laminate structure of a plurality of plate elements 41. The plurality of plate elements 41 are coupled by rivets (not shown). The electrode terminal 2 or 3 is supposed to be inserted from the lower side to the plate section 4.

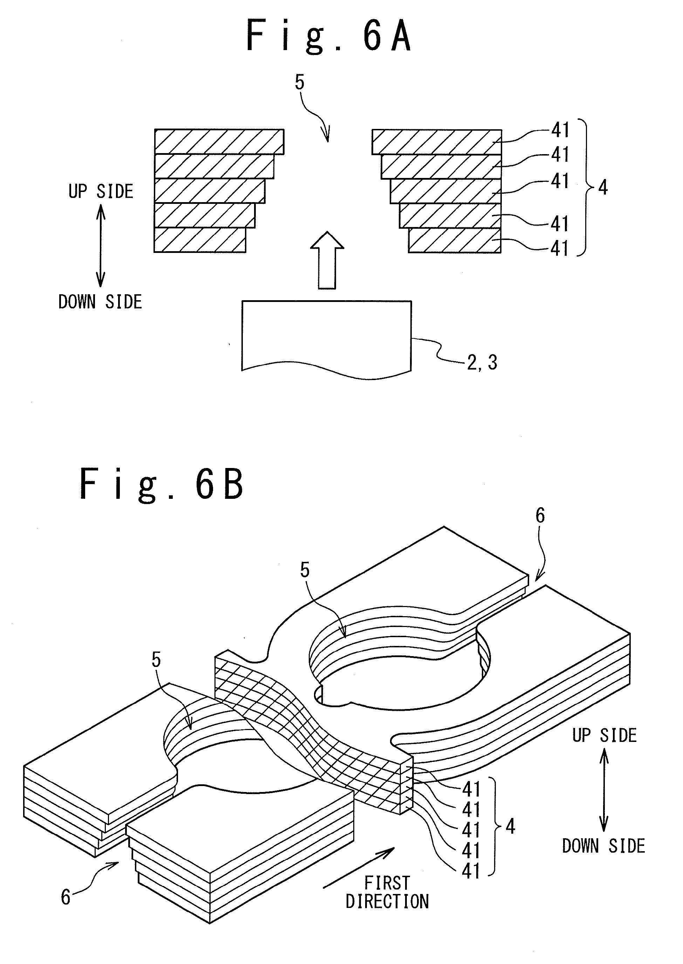

Because the plate section 4 is of the laminate structure in the present embodiment, the characteristics of the plate section 4 can be changed in a thickness direction of the plate. For example, the diameters of the plurality of plate elements 41 corresponding to the opening section 5 may be changed. FIG. 6A is a cross sectional view showing a modification of the present embodiment along the line A-A' of FIG. 5. In the modification, the size of the opening section 5 is changed in the thickness direction of the plate. The size of the opening section 5 (the opening section diameter) becomes larger in the lower side plate element 41. Because the opening section diameter of the lower side plate element is large, it becomes easy to insert the electrode terminal 2 or 3. Also, the inserted electrode terminal 2 or 3 is strongly fastened by the upper side plate elements 41 with smaller opening section diameters. Therefore, the electrode terminal 2 or 3 and the plate section 4 can be surely coupled.

It should be noted that when the size of opening section 5 is changed among the plurality of plate elements 41, it is not always necessary to change the opening section 5 in the whole of circumference of the opening section 5. For example, as shown in FIG. 6B, the plurality of plate elements 41 may change stepwise only in the first slit section 6. Even in the configuration shown FIG. 6B, it is possible to make it easy to insert the electrode terminal 2 or 3.

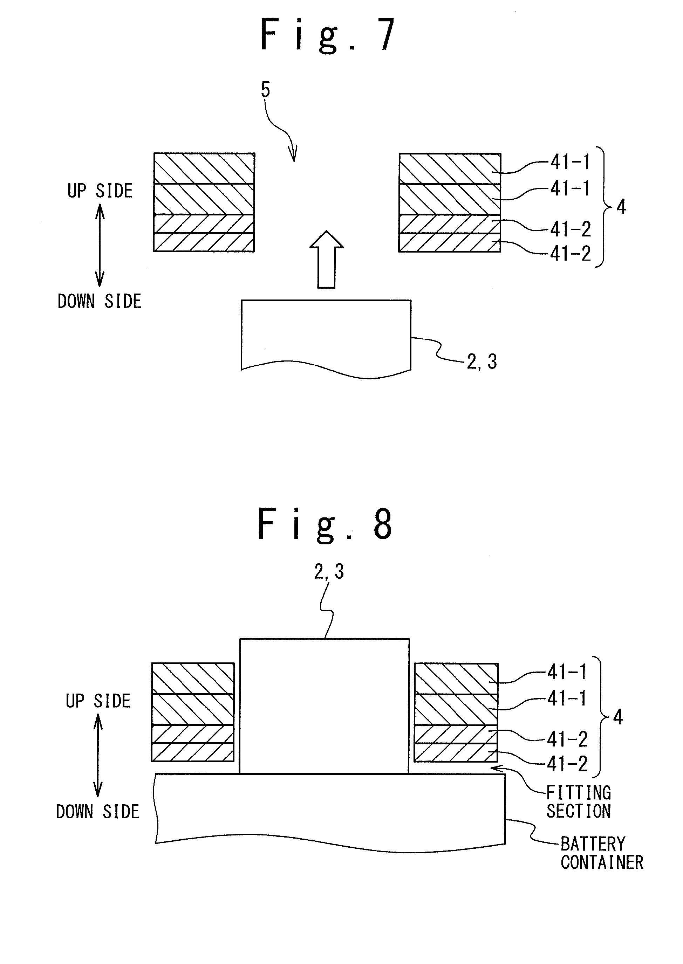

Also, the plate thickness can be changed among the plurality of plate elements 41. FIG. 7 is a cross sectional view showing another modification of the present embodiment. In this modification, the plate section 4 is provided with thin plate elements 41-2 and thick plate elements 41-1. The thin plate elements 41-2 are provided on the lower side and the thick plate elements 41-1 re provided on the upper side. It is easy to insert the electrode terminal 2 or 3 in the opening section 5 because the thin plate element 41-2 is easy to warp. On the other hand, the thick plate element 41-1 is difficult to warp and the inserted electrode terminal 2 or 3 is strongly fastened. Like the example shown in FIG. 6A, the electrode terminal 2 or 3 is easy to be inserted and the electrode terminal 2 or 3 and the plate section 4 can be surely coupled.

Also, FIG. 8 is a diagram showing a state that the electrode terminal 2 or 3 has been inserted in the plate section 4 shown in FIG. 7. A space is difficult to be produced between the cell container of the secondary battery 1 and the plate section 4 of the bus bar because the thin plate elements 41-2 are provided on the lower side and are easy to warp. That is, it is easy to make the plate section 4 fit to the cell container of the secondary battery 1. When the space exists between the cell container of the secondary battery 1 and the plate section 4, the cell container of the secondary battery is exposed to air so that the cell container becomes easy to corrode. On the other hand, by making the plate section 4 fit to the cell container, the corrosion of the cell container can be prevented.

Also, as another modification, the plurality of plate elements 41 may be formed of different materials. For example, a material of high corrosion resistance (e.g. beryllium copper alloy) is used for the upper-side plate element 41-1 and an elastic material (e.g. copper, brass) is used for lower-side plate element 41-2. The corrosion resistance can be improved in a portion easy to be exposed to air by using such materials. Also, by improving the elasticity on the lower side thereof, it is possible to make it easy to insert the electrode terminal 2 or 3.

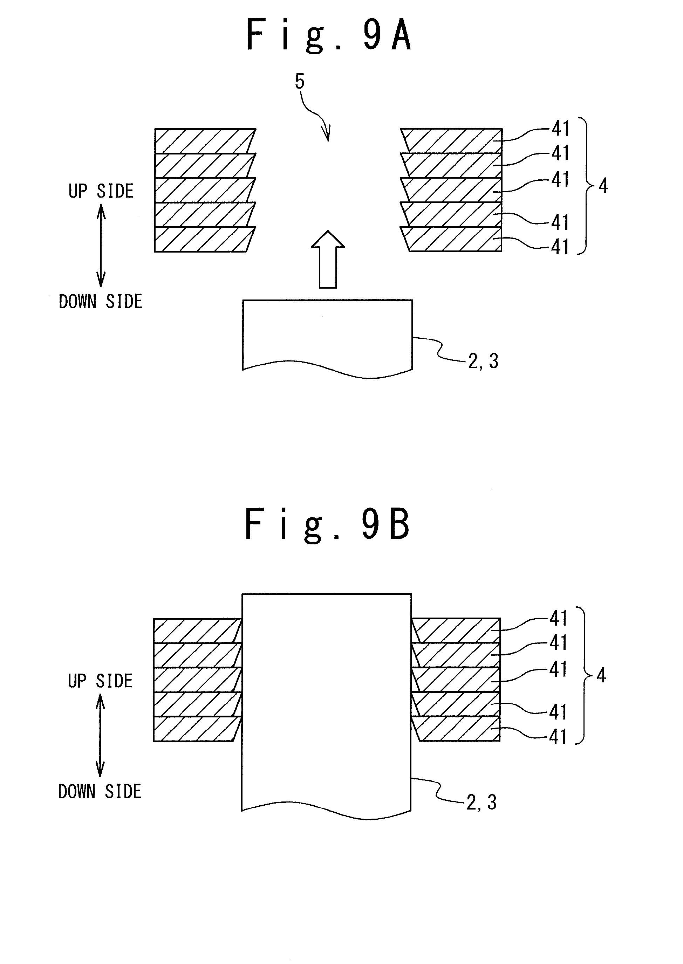

In the plate section 4, the plate elements 41 in the opening section 5 may take a tapered cross section that the opening section diameter becomes larger on the side, from which the electrode terminal 2 or 3 is inserted. FIG. 9A is a cross sectional view showing still another modification of the present embodiment. In this modification, each plate element 41 for the opening section 5 has a taper shape of larger opening section diameter on the lower-side of each plate element. According to this modification, it becomes easy to insert the electrode terminal 2 or 3. Moreover, it becomes difficult for the electrode terminal 2 or 3 inserted once to come off. In addition, the electrode terminal 2 or 3 contacts each of the plurality of plate elements 41 in the opening section 5. That is, it is possible to make the plate section 4 and the electrode terminal 2 or 3 engage to each other surely on many positions (see FIG. 9B). Thus, the contact resistance between the secondary battery and the bus bar can be made little and the reliability of the electric connection can be more improved.

It should be noted that when each element is formed to have the taper shape in the opening section 5, it is not always necessary to form the taper shape along the circumference of opening section 5. For example, each plate element 41 may have the taper shape only in the first slit section 6.

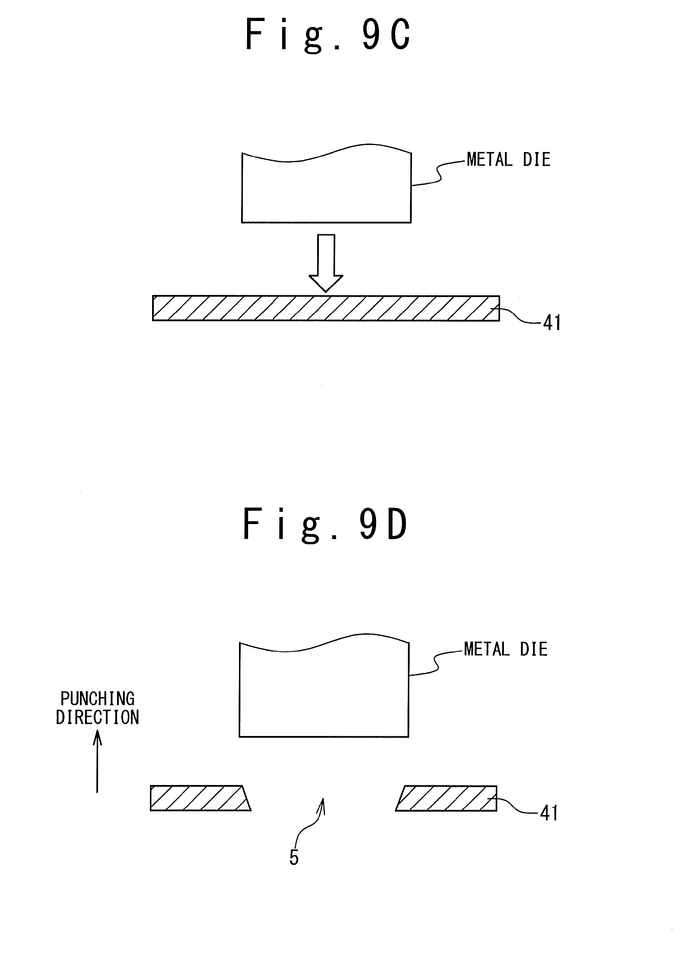

Each plate element 41 having the taper shape in the opening section 5 can be formed as follows. As shown in FIG. 9C, the plate element 41 is prepared and punched out with a die. Thus, as shown in FIG. 9D, the opening section 5 is formed. At this time, in the opening section 5, the opening section diameter becomes larger on the back surface side of the plate element punched by the die. Therefore, if the plurality of plate elements 41 are laminated for the back surface side to face the ground, the plate section 4 with the shape shown in FIG. 9A can be obtained. When manufacturing the plate section 4, a special manufacturing process is not required to form the taper shape.

Also, by the plate section 4 having the laminate structure, the cost on manufacturing the plate section 4 can be suppressed. This is based on a reason described below. That is, in order to provide the opening section 5 for the plate section 4, the plate element is punched by the die. The load applied to the die when punching the thinner plate element is substantially reduced compared with a case of punching a thicker plate element. Therefore, by adoption of the plate section 4 of the laminate structure, the lifetime of the die can be extended and the manufacturing cost can be suppressed.

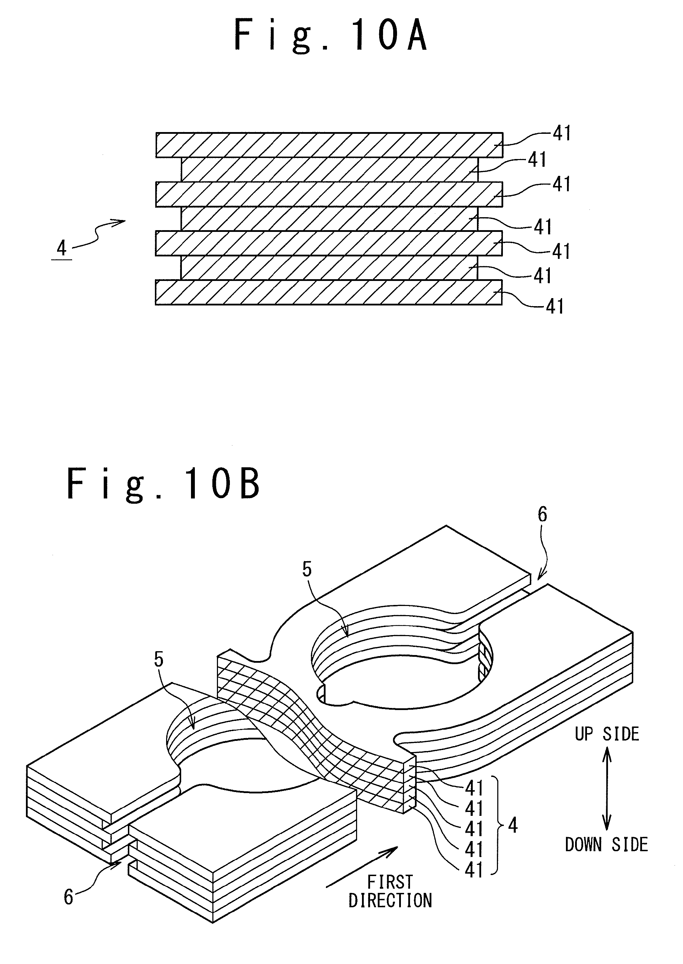

Also, as a still another modification, the plate widths of plurality of plate elements 41 can be changed. FIG. 10A is a cross sectional view showing the modification in which the plate widths have been changed and show the cross section along the line B-B' of FIG. 5. According to this modification, because the plate width is different, a step difference is produced in the end section of the plate section 4 and can increase the surface area of the plate section 4. The current flows through the bus bar, so as to generate heat. By increasing the surface area of the plate section 4, the heat radiation of the bus bar can be improved.

It should be noted that when changing the plate width, it is not always necessary to change the plate width over the whole of plate section 4, and the plate width may be changed in a part of the plate section 4. Also, as shown in FIG. 10B, the step difference may be provided for only the first slit section 6.

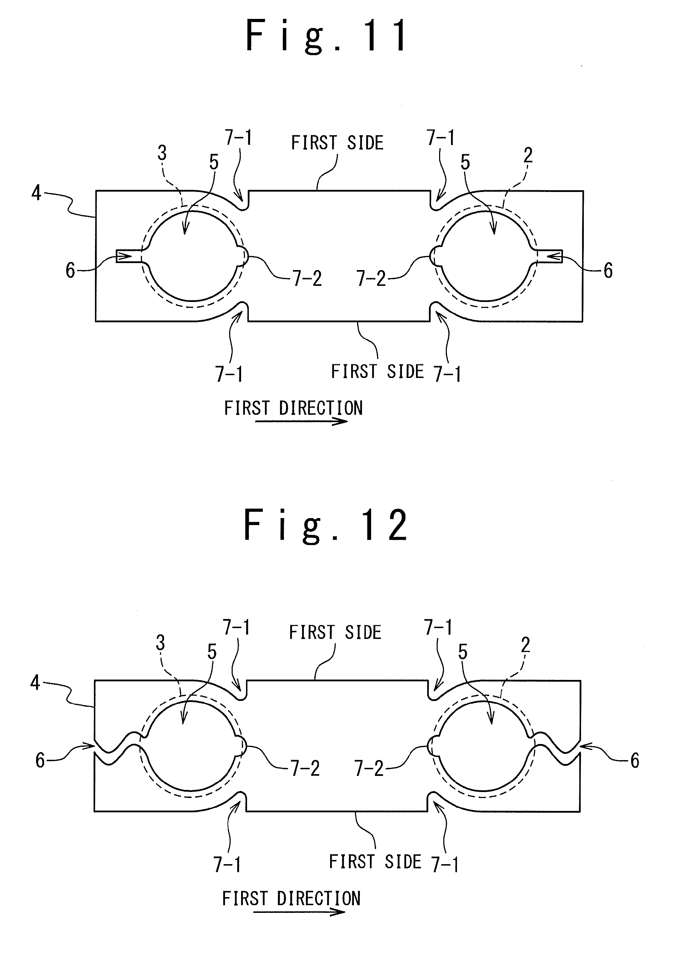

Also, in the present embodiment, a case where the first slit section 6 extends from the opening section 5 to the end of the plate section 4 has been described. However, it is sufficient that the first slit section 6 is provided to elastically fasten the inserted electrode terminal 2 or 3, and the first slit section 6 is not always required to extend from the opening section 5 to the end of the plate section 4. For example, in another modification shown in FIG. 11, the first slit section 6 is closed in the end of the plate section.

In the same way, in the present embodiment, a case where the first slit section 6 straightly extends along the first direction has been described.

However, the first slit section 6 is not always required to extend straightly. For example, as in another modification shown in FIG. 12, the first slit section 6 may be bent and extended.

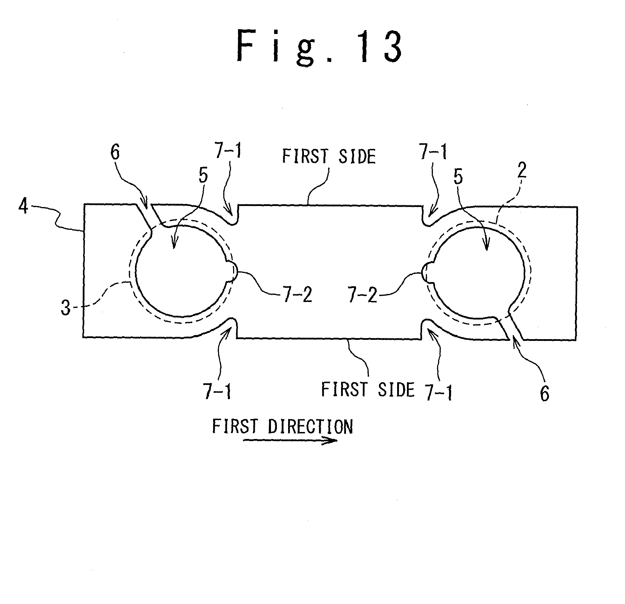

Moreover, in the present embodiment, the first slit section 6 is shown in FIG. 2 in such a manner that the first slit section 6 extends along the first direction in a central portion of the plate section in a lateral direction (a direction orthogonal to the first direction). However, the first slit section 6 is not always required to extend along the first direction in the center of the plate section. For example, as in anther modification shown in FIG. 13, the first slit section 6 may extends diagonally to the first direction.

The plurality of modifications may be applied by combining them. For example the plurality of plate elements 41 may be different in the plate thickness and the opening section diameter.

### [Second Embodiment]

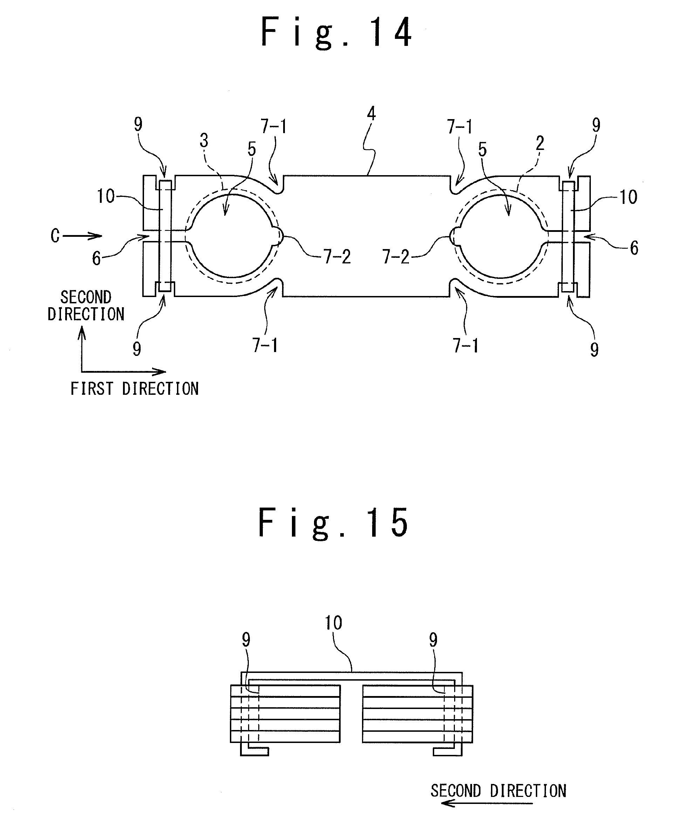

Next, the second embodiment of the present invention will be described. FIG. 14 is a top view showing the bus bar according to the present embodiment. In the present embodiment, it is different from the first embodiment in the point that notches 9 for the auxiliary bar 10 are provided for end portions of the plate section 4 and in the point that the auxiliary bar 10 is provided for the notches 9. Because the other points may be same as in the first embodiment, the detailed description is omitted.

The two notches 9 are provided on both ends of the plate section 4 in the first direction. The two notches 9 are provided to put the first slit section 6 between them in a direction orthogonal to the first direction (a second direction in FIG. 14). These notches 9 are provided to attach the auxiliary bar 10 to the plate section 4.

The auxiliary bar 10 is provided to auxiliarily fasten the electrode terminal 2 or 3 in the opening section 5. FIG. 15 is a side cross sectional view of the bus bar viewed from the direction C of FIG. 14. As shown in FIG. 15, the auxiliary bar 10 extends along the plate width direction (the second direction). Both ends of the auxiliary bar 10 in the second direction are bent to engage with the notches 9.

The auxiliary bars 10 are attached to the plate section 4 after the electrode terminals 2 or 3 are inserted in the opening sections 5. The auxiliary bar 10 is attached to intersect with the first slit section 6. The plate section 4 is bound by the auxiliary bars 10 in the portions in which the first slit sections 6 are provided. Force to fasten the electrode terminal 2 or 3 in the opening section is added by the auxiliary bar 10. Thus, the inserted electrode terminal 2 or 3 becomes difficult to come out so that the reliability of the coupling between the electrode terminal 2 or 3 and the bus bar can be more improved.

### [Third Embodiment]

Next, a third embodiment of the present invention will be described. In the present embodiment, a cover with a large elastic modulus is added. Because the other points may be same as those of the above-mentioned embodiments, the detailed description is omitted.

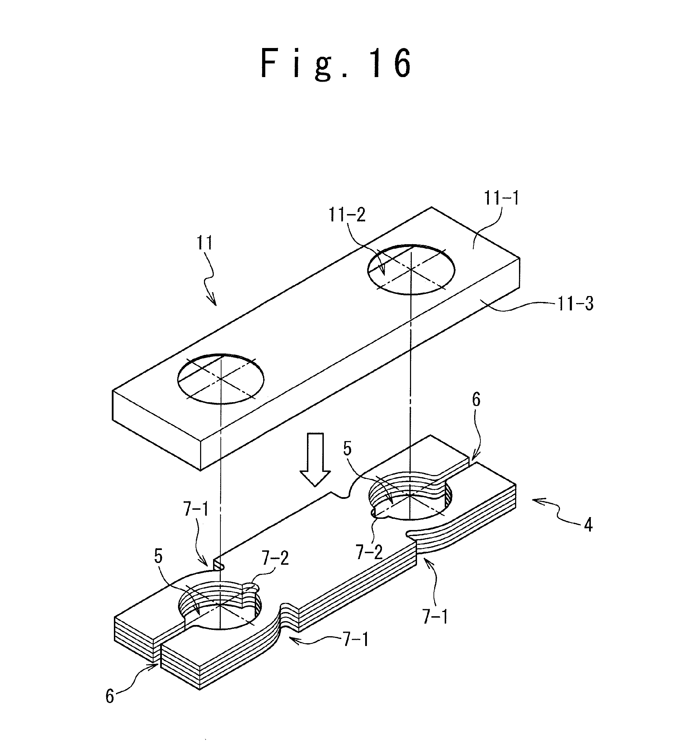

FIG. 16 is a perspective view showing the bus bar according to the present embodiment. The bus bar is provided with a cover 11 in addition to the plate section 4. The cover 11 is provided with a flat portion 11-1, opening sections 11-2 and side sections 11-3. The flat portion 11-1 is a portion which covers the surface of the plate section 4. The side sections 11-3 are portions which cover the side surfaces of the plate section 4. The opening sections 11-2 are portions through which the electrode terminals 2 or 3 pass.

For example, the cover 11 is formed of material with larger elastic modulus than that of the plate sections 4 such as rubber.

In the third embodiment, the plate section 4 is covered by the cover 11. Thus, a portion of the plate section 4 exposed to air is reduced to prevent corrosion of the plate section 4.

As described above, the first to third embodiments have been described. These embodiments may be combined and applied within no contradiction.

## Claims

1. A bus bar for secondary battery, comprising:
a plate section which is electrically conductive;
opening sections which are provided for said plate section and in which convex electrode terminals of secondary batteries are inserted, respectively; and
first slit sections extending from said opening sections, respectively,
wherein a diameter of said opening section is smaller than a diameter of said electrode terminal such that the inserted electrode terminal is fastened.

2. The bus bar according to claim 1, further comprising:
second slit sections provided for said plate section,
wherein said second slit sections are provided for the opening section in a position on which stress concentrates when said opening section is deformed.

3. The bus bar according to claim 1 or 2, further comprising:
an auxiliary bar which is detachable from said plate section; and
a pair of notches provided for one end of said plate section to engage with said auxiliary bar,
wherein said notches of the pair are provided to put said first slit section between said notches in a direction orthogonal to a direction to which said first slit section extends, and
wherein said auxiliary bar engages with the pair of notches to apply auxiliary force so as to fasten the inserted electrode terminal.

4. The bus bar according to any of claims 1 to 3, further comprising:
a cover attached to cover said plate section in a state that said electrode terminals are inserted in said opening sections.

5. The bus bar according to any of claims 1 to 4, wherein said plate section extends in a first direction as a longitudinal direction,
wherein said opening sections are provided in two positions along the first direction, and
wherein said first slit sections are provided for said two opening sections to extend along the first direction.

6. A secondary battery module comprising:
a plurality of secondary batteries, each of which has convex electrode terminals; and
a bus bar according to any of claims 1 to 5, to connect said electrode terminals of adjacent two of said plurality of secondary batteries.

7. A bus bar for secondary battery, comprising:
a plate section which is electrically conductive; and
opening sections which are provided for said plate section and in which convex electrode terminals of secondary batteries are inserted, respectively,
wherein said plate section has a laminate structure of a plurality of plate elements.

8. The bus bar according to claim 7, wherein materials of said plurality of plate elements are different.

9. The bus bar according to claim 7 or 8, wherein plate thicknesses of said plurality of plate elements are different.

10. The bus bar according to any of claims 7 to 9, wherein said plurality of plate elements are different in size of at least one of said opening sections.

11. The bus bar according to claim 10, wherein said electrode terminal is inserted from a lower side of said plate section, and
wherein a lower-side one of said plurality of plate elements has said opening section of a larger diameter.

12. The bus bar according to any of claims 7 to 11, wherein said electrode terminal is inserted from a lower side of said plate section, and
wherein each of said plurality of plate elements has a tapered shape such that a diameter of said opening section in a lower surface of said each plate element is larger than in an upper surface thereof.

13. The bus bar according to any of claims 7 to 12, wherein said plurality of plate elements are different in a width of said plate section.

14. The bus bar according to any of claims 7 to 13, further comprising:
a group of rivets provided for said plate section to couple said plurality of plate elements.

15. The bus bar according to any of claims 7 to 14, wherein said plate section extends in the first direction as a longitudinal direction,
said opening sections are arranged at two positions of said plate sections along the first direction, respectively.

16. A secondary battery module comprising:
a plurality of secondary batteries each having convex electrode terminals; and
said bus bar for secondary battery according to any of claims 7 to 15, configured to connect said electrode terminal of one of said plurality of secondary batteries and said electrode terminal of another of said plurality of secondary batteries which is adjacent to said second battery.
